# EUROPÄISCHE PATENTANMELDUNG

(11) **EP 1 010 487 A1**
(43) Veröffentlichungstag der Anmeldung: **21.06.2000**
(21) Anmeldenummer: 99122352.0
(22) Anmeldetag: 10.11.1999
(51) Int. Cl.: B23D 27/00, B23D 15/06

(54) **Vorrichtung zum Trennen von flächigem Schneidgut**

(30) Priorität: 19.12.1998 DE 19858834
(71) Anmelder: C. & E. FEIN GmbH & Co., D-70176 Stuttgart (DE)
(72) Erfinder: Bortz, Jörg, 72805 Lichtenstein (DE); Ziegler, Rolf, 72820 Sonnenbühl (DE)
(74) Vertreter: Gahlert, Stefan, Dr.-Ing.

(57) **Zusammenfassung**

Es wird eine Vorrichtung zum Trennen von flächigem Schneidgut (22), insbesondere zum Trennen von Blechen angegeben, mit einem Gehäuse, in dem ein motorisch angetriebener Stößeltrieb aufgenommen ist, der einen Stempel (20) längs einer Stößelachse (28) translatorisch hin- und herbewegt, wobei der Stempel (20) eine Schneidfläche (36, 38, 40) aufweist, die mit einer Schneidfläche (42) an einer Matrize (18) zum Trennen des Schneidgutes (22) zusammenwirkt, wobei der Stempel (20) mindestens eine Schneidfläche (36) mit einer der Schneidfläche (42) der Matrize (18) zugewandten Schneidkante (34) aufweist, deren maximale Eindringtiefe (a) in das Schneidgut (22) geringer ist als die Stärke (b) des Schneidgutes (22). Auf diese Weise wird ein Trennen von Blechen nach der Art eines Knabbers ermöglicht, wobei jedoch keine Stanzteile sondern ein zusammenhängender Span entsteht (Fig. 3).

## Beschreibung

Die Erfindung betrifft eine Vorrichtung zum Trennen von flächigem Schneidgut, insbesondere zum Trennen von Blechen, mit einem Gehäuse, in dem ein motorisch angetriebener Stößeltrieb aufgenommen ist, der einen Stempel längs einer Stößelachse translatorisch hin und her bewegt, wobei der Stempel eine Schneidfläche aufweist, die mit einer Schneidfläche an einer Matrize zum Trennen des Schneidgutes zusammenwirkt.

Eine derartige Vorrichtung ist aus der EP 0 363 864 A2 bekannt.

Solche Vorrichtungen sind seit Jahrzehnten zum Trennen von Blechen gebräuchlich und werden im allgemeinen als Knabber bezeichnet.

Dabei ist am Gehäuse des Knabbers eine Matrize festgelegt, über die das Blech geführt wird, während das Blech durch den aufund abbewegten Stößel ausgestanzt wird. Es ergibt sich demnach beim Arbeiten mit einem Knabber eine Vielzahl von Stanzteilen, deren Form durch den Querschnitt des Stempels vorgegeben ist. Diese Stanzteile sind unerwünscht, da sie teilweise an schwer zugänglichen Stellen anfallen und nur unter großem Aufwand entfernt werden können. Gegebenenfalls können derartige Stanzteile sogar in die Lüfterschlitze des Antriebsmotors eindringen und gegebenenfalls zu Schäden führen.

Eine weitere Möglichkeit zum Trennen von Blechen besteht in der Verwendung einer Blechschere. Eine aus der DE 1 955 738 U1 bekannte Blechschere weist ein Gehäuse mit einem im wesentlichen zylindrischen Motorgehäuse auf, in dem der Antriebsmotor aufgenommen ist, und ein sich etwa rechtwinklig dazu erstreckendes Getriebegehäuseteil, in dem ein Stößeltrieb zum Antrieb eines Stößelmessers aufgenommen ist, das mit einem gegenüber liegenden, an einem sogenannten Schneidtisch aufgenommenem feststehenden Schneidtischmesser zusammenwirkt. Der etwa halbkreisförmig ausgebildete Schneidtisch dient zur Führung der Blechschere entlang von zu schneidendem Schnittgut und zur Halterung des Schneidtischmessers in einem geeigneten Abstand vom am Ende des Stößels aufgenommenen Stößelmesser.

Im Unterschied zum Knabber werden bei einer Blechschere keine einzelnen Teile aus dem zu trennenden oder zu besäumenden Blech ausgestanzt. Vielmehr wird das Blech lediglich entlang einer Trennlinie mit Verlauf des Schnittes durchtrennt. Dieser unterschiedliche Ablauf liegt darin begründet, daß beim Arbeiten mit einer Blechschere zwei schräg zueinander angeordnete Schneidkanten allmählich aufeinander zu bewegt werden, wodurch das Schneidgut durchtrennt wird. Wird ein Blech am Rand mit einer Blechschere besäumt, so ergibt sich ein endloser Span durch den abgetrennten Teil, der sehr scharfkantig sein kann und außerdem beim Arbeiten stört. Ferner ergibt sich beim Arbeiten mit einer Blechschere der erhebliche Nachteil, daß sich das Blech beim Arbeiten entlang der Schnittlinie verformt bzw. wellt.

Die Aufgabe der Erfindung besteht darin, eine verbesserte Vorrichtung zum Trennen von flächigem Schneidgut zu schaffen, die insbesondere zum Trennen von Flächen geeignet ist und die Nachteile eines Knabbers einerseits und einer Blechschere andererseits vermeidet. Dabei soll ein möglichst einfaches Arbeiten wie beim Knabber erreicht werden, jedoch die Entstehung von kleinen Stanzteilen vermieden werden.

Erfindungsgemäß wird diese Aufgabe bei einer Vorrichtung gemäß der eingangs genannten Art dadurch gelöst, daß der Stempel mindestens eine Schneidfläche mit einer der Schneidfläche der Matrize zugewandten Schneidkante aufweist, deren maximale Eindringtiefe in das Schneidgut geringer als die Stärke des Schneidgutes ist.

Die Aufgabe der Erfindung wird auf diese Weise vollkommen gelöst.

Erfindungsgemäß werden nämlich auf diese Weise die Vorteile eines Knabbers mit den Vorteilen einer Blechschere verbunden. Dadurch, daß die maximale Eindringtiefe der Schneidkante des Stempels an der der Schneidfläche der Matrize zugewandten Seite geringer ist als die Stärke des Schneidgutes, wird das Schneidgut an dieser Stelle nicht vollständig abgeschert, sondern nur in Bewegungsrichtung des Stempels eingeprägt. Erst mit einer weiteren Schneidkante, die gegenüber der ersten Schneidkante versetzt angeordnet ist oder mit einem anderen Teil derselben Schneidfläche wird das Schneidgut unterhalb des Stempels vollständig aus dem übrigen Zusammenhalt des Schneidgutes herausgetrennt, so daß das Entstehen von einzelnen Stanzstücken vermieden wird und statt dessen ein endloser Span entsteht, dessen Querschnitt jedoch entsprechend dem Verlauf der am Stempel vorgesehenen Schneidflächen geschwächt ist, so daß eine mögliche Verletzungsgefahr durch einen sich aufrollenden Span stark reduziert ist. Da der Trennvorgang nach dem Prinzip des Knabbers als Stanzvorgang erfolgt und nicht nach dem Prinzip des Schneidens wie bei einer Blechschere, wird eine Verformung des Schneidgutes weitgehend vermieden.

In vorteilhafter Weiterbildung der Erfindung weist der Stempel mehrere stufenartig miteinander verbundene und entlang der Stößelachse versetzt angeordnete Schneidflächen auf.

Diese Maßnahme hat den Vorteil, daß mehrere Schneidkanten gebildet sind, die räumlich zueinander versetzt nacheinander in das Schneidgut eindringen und so das Heraustrennen eines Spans aus dem Schneidgut ermöglichen, der durch die verschiedenen zueinander versetzten Schneidflächen bzw. Schneidkanten ausgeprägte Querschnittsverminderungen aufweist, so daß die Stabilität des Spans vermindert wird und dieser leichter biegsam wird, so daß Behinderungen durch den Span während des Arbeitsablaufes vermieden bzw. reduziert werden.

Grundsätzlich ist zu berücksichtigen, daß der Begriff Schneidkante nicht im einschränkenden Sinn wie beim Knabber zu verstehen ist, bei dem die Schneidkante des Stempels unmittelbar mit der Schneidkante der Matrize zusammenwirkt. So wäre es beispielsweise denkbar, die der Matrize zugewandte, vordere Schneidkante des Stempels mit einem gewissen Abstand zur Matrize anzuordnen, so daß an dieser Stelle kein Schneiden im eigentlichen Sinn, sondern nur ein Eindrücken des Schneidgutes erfolgt.

In bevorzugter Weiterbildung der Erfindung ist der Versatz von benachbarten Schneidflächen entlang der Stößelachse geringer als die Stärke des Schneidgutes.

Gemäß einer weiteren Ausführung der Erfindung weist der Stempel drei Schneidflächen auf, die von der Schneidfläche der Matrize aus gesehen in einer Richtung senkrecht zur Stößelachse hintereinander angeordnet sind.

Hierbei ist vorzugsweise zumindest eine der Stufen im Querschnitt rechteckförmig ausgebildet.

Durch diese Maßnahmen wird einerseits erreicht, daß der Span über den Querschnitt des Stempels gesehen von einer Mehrzahl von Schneidflächen ausgehend von der mit der Matrize zusammenwirkenden Schneidfläche allmählich aus dem übrigen Schneidgut herausgetrennt wird und daß sich ein günstiger Spanverlauf und eine günstige Spanform einstellt.

Gemäß einer weiteren Variante der Erfindung verläuft zumindest eine der Schneidflächen in Bezug auf die Stößelachse schräg.

Bei einer derartigen Ausgestaltung kann der Stempel auch nur eine einzige schräg verlaufende Schneidfläche aufweisen, durch die das Schneidgut unterhalb der Querschnittsfläche des Stempels ausgehend von der mit der Matrize zusammenwirkenden Schneidkante kontinuierlich aus dem übrigen Schneidgut herausgetrennt wird. Dadurch weist der Stempel eine besonders leicht herstellbare Form auf.

Allerdings ist es wie zuvor bereits erwähnt bevorzugt, mehrere Schneidflächen am Stempel vorzusehen, die winklig zueinander angeordnet sind, um so gezielte Querschnittsverminderungen am Span zu erreichen und auf diese Weise einen günstigeren Spanverlauf sicherzustellen.

Gemäß einer weiter bevorzugten Ausgestaltung der Erfindung ist zumindest die Matrize oder der Stempel in Richtung der Stößelachse verstellbar angeordnet.

Diese Maßnahme hat den Vorteil, daß je nach der Stärke des zu bearbeitenden Schnittgutes die Eindringtiefe des Stempels an der der Matrize zugewandten Schneidkante eingestellt werden kann, um einen optimalen Arbeitsablauf zu gewährleisten.

In weiter bevorzugter Ausgestaltung der Erfindung ist die Matrize an einem Matrizenhalter befestigt, an dem ein Spankanal zur Spanabfuhr vorgesehen ist.

Dieser Spankanal verläuft bei einer ersten Variante der Erfindung etwa in Richtung der Stößelachse oder gemäß einer zweiten Variante der Erfindung schräg zur Stößelachse im Matrizenhalter, so daß eine unmittelbare Spanabfuhr von der Entstehungsstelle aus gewährleistet ist.

Es versteht sich, daß die Merkmale der Erfindung nicht nur in der jeweils genannten Kombination sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung.

Es zeigen:
- Fig. 1: eine perspektivische Darstellung einer erfindungsgemäßen Vorrichtung im Einsatz zum Trennen eines Bleches;
- Fig. 2: einen Längsschnitt durch den Matrizenhalter nebst Stempel in vergrößerter Darstellung, wobei sich der Stempel in seinem oberen Totpunkt befindet;
- Fig. 3: einen Schnitt gemäß Fig. 2, wobei sich der Stempel in seinem unteren Totpunkt befindet;
- Fig. 4: eine Ansicht des Schneidgutes und des entstehenden Spanes von vorn; und
- Fig. 5a) bis 5e): verschiedene Stempelformen gemäß der Erfindung.

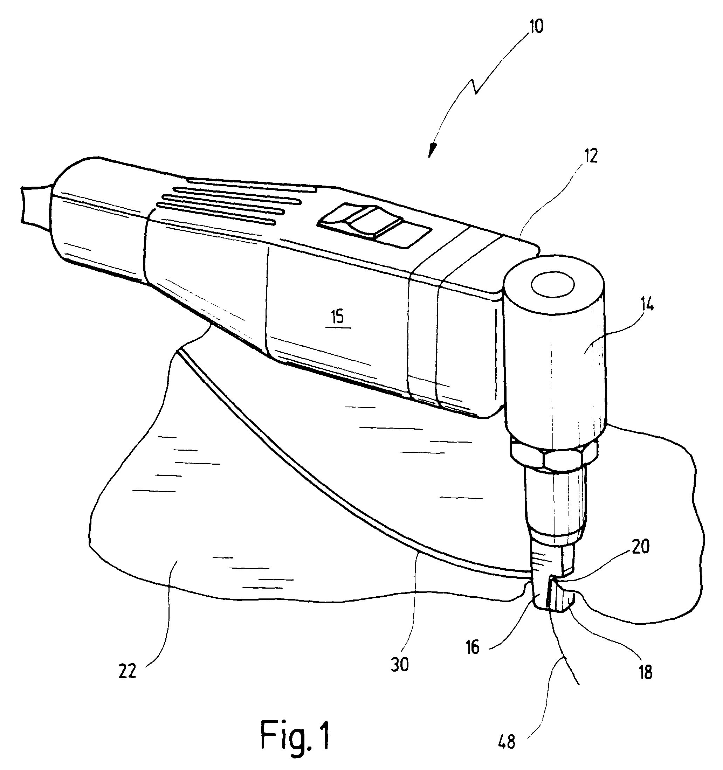

In Fig. 1 ist eine erfindungsgemäße Vorrichtung perspektivisch dargestellt und insgesamt mit der Ziffer 10 bezeichnet. Die Vorrichtung 10 umfaßt ein Gehäuse 12, in dem ein Motor 15 aufgenommen ist und an dessen vorderem Ende ein Stößeltrieb 14 vorgesehen ist, mittels dessen die Motordrehung in eine aufund abgehende translatorischen Bewegung umgesetzt wird, durch die ein Stempel 20 auf- und abbewegt wird. Am unteren Ende des Gehäuses 12 ist ein Matrizenhalter 16 befestigt, an dem eine Matrize 18 gehalten ist. Die Matrize 18 wirkt mit dem nur schematisch angedeuteten Stempel 20 zusammen, durch den das Schneidgut 22 durchtrennt wird, wobei ein zusammenhängender Span, der schematisch mit Ziffer 48 angedeutet ist, entsteht.

In Fig. 1 ist erkennbar, daß das Schneidgut 22 bereits entlang einer Trennlinie 30 getrennt wurde (der Matrizenhalter 16 ist zum Zwecke der besseren Erkennbarkeit freigeschnitten dargestellt).

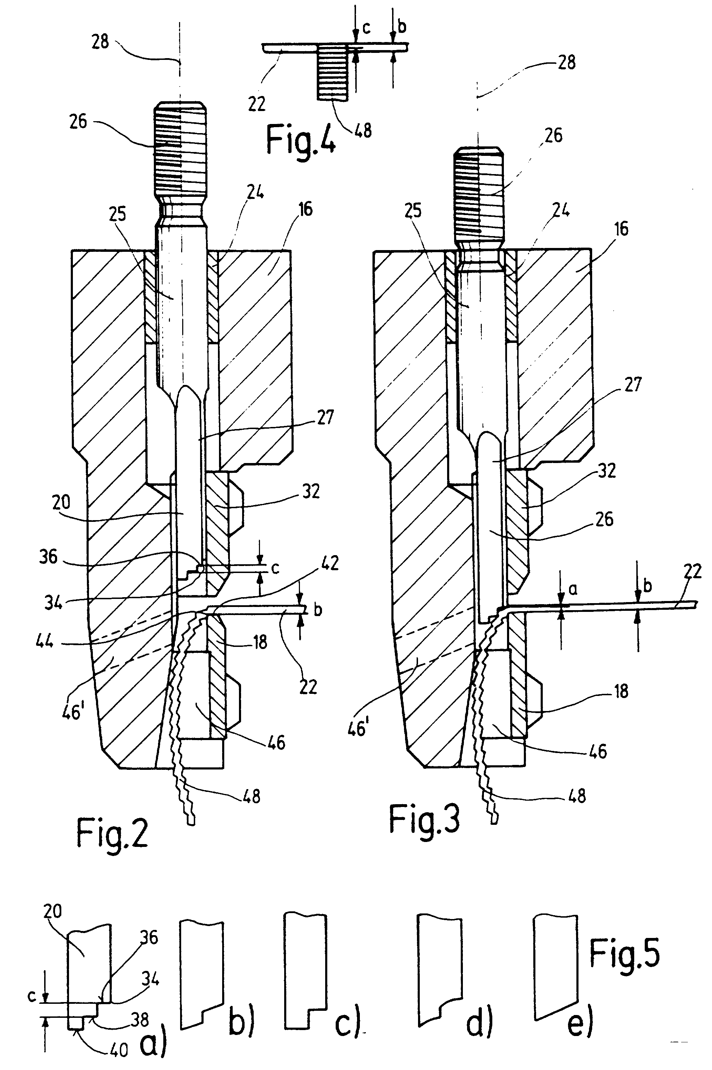

Der Aufbau der erfindungsgemäßen Vorrichtung wird im folgenden anhand der Fig. 2 bis 5 näher erläutert.

Gemäß Fig. 2 ist im Matrizenhalter 16 der Stempel 20 entlang einer Stößelachse 28 auf- und abbewegbar, der über einen Gewindeschaft 26 mit einem nicht dargestellten Stößeltrieb 14 zum Antrieb verbunden ist. Der Stempel 20 ist länglich ausgebildet und besitzt etwa im Bereich seiner oberen Hälfte einen zylindrischen Stempelschaft 25, der in einer Führungsbuchse 24 am Matrizenhalter 16 geführt ist und an dessen äußerem Ende der Gewindeschaft 26 zur Schraubverbindung mit dem nicht dargestellten Stößel vorgesehen ist. Unterhalb des zylindrisch ausgebildeten Stempelschaftes 25 schließt sich ein Stempelabschnitt 27 an, der einen beispielsweise rechteckförmigen Querschnitt aufweist und in einer Stempelführung 32 geführt ist.

Im Gegensatz zu herkömmlichen Knabbern ist der Stempelabschnitt 27 an seiner unteren Stirnfläche nicht eben ausgeführt, sondern besitzt eine treppenförmige Form, wie im folgenden noch näher erläutert wird.

Der Stempel 20 wirkt mit einer am unteren Ende des Matrizenhalters 16 auswechselbar aufgenommenen Matrize 18 zusammen, deren oberes Ende als Schneidfläche 42 ausgebildet ist, über die das Schneidgut 22 geführt wird und an deren dem Stempel 20 zugewandten Ende eine mit der Ziffer 44 angedeutete Schneidkante gebildet ist, die mit einer Schneidkante 34 (vergleiche Fig. 5a) am unteren Ende des Stempels 20 zusammenwirkt.

Wie aus der vergrößerten Darstellung gemäß Fig. 5a) ersichtlich ist, weist der Stempel 20 an seinem unteren Ende insgesamt drei Schneidflächen 36, 38, 40 auf, die senkrecht zur Stößelachse 28 verlaufen. Die erste Schneidfläche 36 endet an ihrer der Matrize 18 zugewandten Seite in der Schneidkante 34, die mit der Schneidkante 44 der Matrize 18 zusammenwirkt. Die nachfolgenden Schneidflächen 38 und 40 sind gegenüber der ersten Schneidfläche 36 jeweils um einen Betrag, der in den Fig. 2 und 5a) mit c bezeichnet ist, versetzt.

Beim Arbeiten mit der erfindungsgemäßen Vorrichtung wird durch die auf- und abgehende Bewegung des Stempels 20 unterhalb der Stempelquerschnittsfläche aus dem Schneidgut 22 ein Endlosspan 48 ausgestanzt, der durch einen Spankanal 46, der sich in Richtung der Stößelachse 28 nach unten erstreckt, austreten kann.

In alternativer Weise kann der Spankanal, wie in den Fig. 2 und 3 gestrichelt mit der Ziffer 46' angedeutet, auch schräg nach unten verlaufen, so daß der entstehende Span noch günstiger abgeführt werden kann.

In den Fig. 2 und 3 ist die Stärke des Schneidgutes 22, das über die Matrize 18 läuft, mit b bezeichnet.

Während der Stempel 20 gemäß Fig. 2 in seinem oberen Totpunkt dargestellt ist, befindet sich der Stempel 20 gemäß Fig. 3 in seinem unteren Totpunkt.

Durch die Abwärtsbewegung des Stempels 20 dringt dieser in das Schneidgut 22 ein, sobald die erste Schneidfläche 36 die Oberfläche des Schneidgutes 22 erreicht. Die maximale Eindringtiefe der ersten Schneidfläche 36 bzw. der Schneidkante 34 des Stempels 20 in das Schneidgut 22 ist in Fig. 3 dargestellt und mit a bezeichnet.

Diese maximale Eindringtiefe a ist nun erfindungsgemäß geringer als die Stärke b des Schneidgutes 22.

Dadurch wird das Schneidgut 22 nicht wie bei herkömmlichen Knabbern mit der Schneidfläche 36 durch Zusammenwirken mit der Schneidfläche 42 der Matrize abgeschert, sondern lediglich um den Betrag a eingestanzt. Erst aufgrund der nachfolgenden Schneidflächen 38 und 40, die weiter nach unten jeweils um den Betrag c versetzt sind, wird das Schneidgut 22 in diesem Bereich völlig durchtrennt, so daß im Ergebnis der zusammenhängende Span 48 aus dem Schneidgut 22 ausgestanzt wird.

Diese Verhältnisse sind zusätzlich anhand der Fig. 4 verdeutlicht, in der der Span 48 von vorn dargestellt ist. Im Span 48 finden sich Abdrücke wieder, deren Abstand durch den Abstand c der einzelnen Schneidflächen 36, 38, 40 vorgegeben ist.

Diese Abdrücke führen zu einer Querschnittsverringerung des Spans 48 an den betreffenden Stellen, wodurch dieser eine relativ hohe Flexibilität erhält und somit den Arbeitsvorgang kaum behindert und eine leichte Spanabfuhr ermöglicht wird.

In Fig. 5b) bis e) sind weitere Querschnittsformen des Stempels 20 dargestellt, die lediglich beispielhaft zu verstehen sind, da weitere Querschnittsformen denkbar sind. Gemäß Fig. 5b) sind zwei Schneidflächen vorgesehen, die in Bezug auf die Stößelachse 28 schräg angeordnet sind. Gemäß Fig. 5c) sind zwei Schneidflächen vorgesehen, die rechtwinklig zur Stößelachse 28 angeordnet sind. Gemäß Fig. 5d) sind zwei Schneidflächen vorgesehen, die eine gekrümmte Oberfläche aufweisen.

Gemäß Fig. 5e) ist lediglich eine einzige Schneidfläche vorgesehen, die über die gesamte Breite des Stempelquerschnitts schräg nach unten verläuft und sich ausgehend von der der Matrize 18 zugewandten Seite aus nach unten erstreckt.

## Patentansprüche

1. Vorrichtung zum Trennen von flächigem Schneidgut (22), insbesondere zum Trennen von Blechen, mit einem Gehäuse (12), in dem ein motorisch angetriebener Stößeltrieb (14) aufgenommen ist, der einen Stempel (20) längs einer Stößelachse (28) translatorisch hin und her bewegt, wobei der Stempel (20) eine Schneidfläche (36, 38, 40) aufweist, die mit einer Schneidfläche (42) an einer Matrize (18) zum Trennen des Schneidgutes (22) zusammenwirkt, dadurch gekennzeichnet, daß der Stempel (20) mindestens eine Schneidfläche (36) mit einer der Schneidfläche (42) der Matrize (18) zugewandten Schneidkante (34) aufweist, deren maximale Eindringtiefe (a) in das Schneidgut (22) geringer als die Stärke (b) des Schneidgutes (22) ist.

2. Vorrichtung nach Anspruch 1, dadurch gekennzeichnet, daß der Stempel (20) mehrere stufenartig miteinander verbundene und entlang der Stößelachse (28) versetzt angeordnete Schneidflächen (36, 38, 40) aufweist.

3. Vorrichtung nach Anspruch 2, dadurch gekennzeichnet, daß der Versatz (c) von benachbarten Schneidflächen (36, 38, 40) entlang der Stößelachse (28) geringer als die Stärke (b) des Schneidgutes (22) ist.

4. Vorrichtung nach einem der vorhergehenden Ansprüche, dadurch gekennzeichnet, daß der Stempel (20) drei Schneidflächen (36, 38, 40) aufweist, die von der Schneidfläche (42) der Matrize (18) aus gesehen in einer Richtung senkrecht zur Stößelachse (28) hintereinander angeordnet sind.

5. Vorrichtung nach einem der vorhergehenden Ansprüche, dadurch gekennzeichnet, daß zumindest eine der Stufen im Querschnitt rechteckförmig ausgebildet ist.

6. Vorrichtung nach einem der vorhergenden Ansprüche, dadurch gekennzeichnet, daß zumindest eine Schneidflächen in Bezug auf die Stößelachse (28) schräg verläuft.

7. Vorrichtung nach einem der vorhergehenden Ansprüche, dadurch gekennzeichnet, daß zumindest die Matrize (18) oder der Stempel (20) in Richtung der Stößelachse (28) verstellbar angeordnet ist.

8. Vorrichtung nach einem der vorhergehenden Ansprüche, dadurch gekennzeichnet, daß die Matrize (18) an einem Matrizenhalter (16) befestigt ist, an dem ein Spankanal (46, 46') zur Spanabfuhr vorgesehen ist.

9. Vorrichtung nach Anspruch 8, dadurch gekennzeichnet, daß der Spankanal (46) etwa in Richtung der Stößelachse (28) im Matrizenhalter (16) verläuft.

10. Vorrichtung nach Anspruch 8, dadurch gekennzeichnet, daß der Spankanal (46') schräg zur Stößelachse (28) im Matrizenhalter (16) verläuft.
